# EUROPÄISCHE PATENTANMELDUNG

(11) **EP 2 518 365 A2**
(43) Veröffentlichungstag der Anmeldung: **31.10.2012**
(21) Anmeldenummer: 12165964.3
(22) Anmeldetag: 27.04.2012
(51) Int. Cl.: F16F 9/512

(54) **Dämpferbein für ein Fahrrad**

(30) Priorität: 29.04.2011 DE 102011002339
(71) Anmelder: Ripa, Thomas, 82211 Herrsching (DE)
(72) Erfinder: Ripa, Thomas, 82211 Herrsching (DE)
(74) Vertreter: Fischer, Ernst

(57) **Zusammenfassung**

Ein Dämpferbein für ein Fahrrad weist einen hydraulischen Stoßdämpfer (2) auf, der ein mit einem inkompressiblen Dämpferfluid gefülltes Dämpfervolumen (10), eine Druckbeaufschlagungseinrichtung (39 bis 67), die eingerichtet ist den aktuellen Verfahrzustand des Dämpferbeins zu detektieren, sowie mindestens ein Tellerventil (28) aufweist und eingerichtet ist, dass beim Verfahren des Dämpferbeins (1) das Dämpfervolumen (10) sich verändert, wodurch das Dämpferfluid unter Erzeugung einer dem Verfahren entgegenwirkenden Dämpfungskraft durch das mindestens eine Tellerventil (28) strömt, das einen Steuerkolben (31) aufweist, der mit dem Tellerventil (28) gekoppelt ist den Öffnungsgrad des Tellerventils (28) zu variieren und von der Druckbeaufschlagungseinrichtung (39 bis 67) derart in Abhängigkeit des von der Druckbeaufschlagungseinrichtung (39 bis 67) detektierten Verfahrzustands mit einem kompressiblen Steuerfluid druckbeaufschlagbar ist, dass beim Detektieren eines vorherbestimmten Verfahrzustands des Dämpferfederbeins (1) das Tellerventil (28) in seine Schließrichtung vorgespannt ist, wodurch die Dämpfungskraft verstärkt ist.

## Beschreibung

Die Erfindung betrifft ein Dämpferbein für ein Fahrrad.

Ein Dämpferbein für ein Fahrrad, wie beispielsweise ein Trekkingrad oder ein Mountainbike, oder andere Landfahrzeuge ist herkömmlich in Kombination mit einem Federbein als eine Radaufhängung bekannt. Herkömmlich ist das Dämpferbein in Hydraulikbauart ausgeführt, wobei das Dämpferbein beispielsweise ein mit einem Dämpferfluid gefüllter Einrohrdämpfer ist. In dem Einrohrdämpfer ist ein Dämpferkolben zum Verdrängen des Dämpferfluids längsverschiebbar gelagert, wobei der Dämpferkolben eine Mehrzahl an Dämpferöffnungen aufweist. Beim Ein- und Ausfahren des Dämpferbeins wird der Dämpferkolben in dem Einrohrdämpfer verschoben, so dass von dem Dämpferkolben das Dämpferfluid derart verdrängt wird, dass das Dämpferfluid durch die Dämpferöffnungen strömt. Die Strömung des Dämpferfluids in dem Einrohrdämpfer insbesondere durch die Dämpferöffnungen ist verlustbehaftet, woraus sich resultierend eine Dämpferkraft ergibt, die dem Verfahren des Dämpferbeins entgegenwirkt.

Beim Eintreten von diversen Fahrsituationen mit dem Fahrrad sind an das Dämpferbein insbesondere hinsichtlich der Stärke der Dämpferkraft Anforderungen gestellt, durch die eine Fahrt mit dem Fahrrad mit hoher Sicherheit bei hohem Komfort ermöglicht ist. So ist es wünschenswert, wenn beispielsweise mit dem Fahrrad durch ein Schlagloch gefahren wird, das sowohl beim Hineinfahren des Rads in das Schlagloch als auch beim Herausfahren des Rads aus dem Schlagloch die Dämpferkraft möglichst gering ist. Ferner ist es wünschenswert, dass beispielsweise während des Überfahrens eines Hindernisses beim Hinauffahren des Rads auf das Hindernis unter Einfedern des Dämpferbeins die Dämpferkraft, insbesondere vorteilhaft im letzten Drittel des maximalen Hubes des Dämpferbeins, progressiv zunimmt, wodurch die Gefahr unterbunden ist, dass das Dämpferbein über seinen maximalen Hub verfahren wird und dadurch "durchschlägt", und beim Herabfahren des Rads von dem Hindernis unter Ausfedern des Dämpferbeins die Dämpferkraft möglichst hoch ist, wodurch die Horizontallage des Fahrrads beim Überfahren des Hindernisses möglichst unverändert bleibt. Außerdem ist es wünschenswert, dass, wenn eine Person auf dem Fahrrad sitzt und mit ihrem Eigengewicht die Radaufhängungen nachgeben, diese Anforderungen an die Dämpferkraft ebenfalls hinreichend erzielbar sind. Insbesondere bei Dämpferbeinen für Fahrräder oder anderen Leichtfahrzeugen ist es von großem Vorteil, wenn sich aufgrund der im Verhältnis zur Fahrzeumasse sehr hohen Fahrermasse, die Dämfungskräfte des Dämpferbeins abhängig von dem vom Fahrer, insbesondere zur Anpassung an seine Masse, voreinstellbaren Gasdruck, einer parallel zu diesem Dämpferbein wirkenden Gasdruckfeder sind, und sich somit automatisch im richtigen Verhältnis zur Federsteifigkeit des Gasdruckfederbeins in ihrer Höhe anpassen, ihren charakteristischen, hubabhängigen Verlauf aber beibehalten. Aufgabe der Erfindung ist es ein Dämpferbein für ein Fahrrad zu schaffen, wobei mit dem Fahrrad, das mit dem Dämpferbein ausgestattet ist, ein sicheres Fahren bei hohem Komfort und einfacher Bedienung ermöglicht ist.

Die Aufgabe wird gelöst mit den Merkmalen des Patentanspruchs 1. Vorteilhafte Ausgestaltungen dazu sind in den weiteren Patentansprüchen angegeben.

Das erfindungsgemäße Dämpferbein für ein Fahrrad weist einen hydraulischen Stoßdämpfer auf, der ein mit einem inkompressiblen Dämpferfluid gefülltes Dämpfervolumen, eine Druckbeaufschlagungseinrichtung, die eingerichtet ist den aktuellen Verfahrzustand des Dämpferbeins zu detektieren, sowie mindestens ein Tellerventil aufweist und eingerichtet ist, dass beim Verfahren des Dämpferbeins das Dämpfervolumen sich verändert, wodurch das Dämpferfluid unter Erzeugung einer dem Verfahren entgegenwirkenden Dämpferkraft durch das mindestens eine Tellerventil strömt, das einen Steuerkolben aufweist, der mit dem Tellerventil gekoppelt ist den Öffnungsgrad des Tellerventils zu variieren und von der Druckbeaufschlagungseinrichtung derart in Abhängigkeit des von der Druckbeaufschlagungseinrichtung detektierten Verfahrzustands mit einem kompressiblen Steuerfluid druckbeaufschlagbar ist, dass beim Detektieren des vorherbestimmten Verfahrzustands des Dämpferbeins das Tellerventil in seine Schließrichtung vorgespannt ist, wodurch die Dämpfungskraft verstärkt ist.

Als der vorherbestimmte Verfahrzustand ist beispielsweise der Zustand des Federbeins, wenn dieses beginnt sich einzufahren, beispielsweise beim Hinauffahren auf einen Bordstein mit dem Fahrrad. Folglich wird beim Hinauffahren des Bordsteins mit dem Fahrrad dies als der vorherbestimmte Verfahrzustand von der Druckbeaufschlagungseinrichtung detektiert, wodurch der Steuerkolben mit dem Steuerfluid so druckbeaufschlagt wird, dass der Öffnungsgrad des Tellerventils sich verkleinert. Aufgrund dieses kleiner gewordenen Öffnungsgrads des Tellerventils sind weitere Strömungsverluste in der Dämpferfluidströmung erzeugt, so dass beim weiteren Einfahren des Dämpferbeins die Dämpfungskraft verstärkt ist. Wird beispielsweise beim Durchfahren durch ein kleines Schlagloch mit dem Fahrrad der vorherbestimmte Verfahrzustand des Dämpferbeins nicht erreicht, so dass in dieser Fahrsituation der vorherbestimmte Verfahrzustand von dem Druckbeaufschlagungsmittel nicht detektiert wird, bleibt der Öffnungsgrad des Tellerventils groß, so dass die Dämpfungskraft klein oder Null ist, wodurch das Durchfahren durch das kleine Schlagloch so gut wie dämpfungsfrei erfolgt. Hinsichtlich der Fahrkinematik des Fahrrads kann sicher bei hohem Fahrkomfort sowohl auf den Bordstein hinaufgefahren als auch durch das Schlagloch hindurchgefahren werden, so dass die Fahrsicherheit und der Fahrkomfort des Fahrrads, das mit dem erfindungsgemäßen Federbein ausgestattet ist, hoch ist.

Die Druckbeaufschlagungseinrichtung weist bevorzugt ein Steuerfluidreservoir auf, das derart eingerichtet ist, dass sich der Druck des Steuerfluids bei abnehmendem Hub des Dämpferbeins erhöht. Außerdem ist es bevorzugt, dass das Dämpferbein eine Gasdruckfeder aufweist, die parallel zum Stoßdämpfer geschaltet und ein mit einem kompressiblen Federfuid gefülltes Federvolumen aufweist, wobei das Federfluid das Steuerfluid und das Federvolumen das Steuerfluidreservoir ist. Dadurch, dass das Steuerfluid kompressibel und insbesondere das Dämpferfluid inkompressibel ist, ist der Steuerkolben von dem Steuerfluid federnd gelagert. Somit stellt sich der Öffnungsgrad des Tellerventils beim oder nach dem Detektieren des vorherbestimmten Verfahrzustands hinsichtlich der Kompressibilität des Steuerfluids und dessen am Steuerkolben anliegenden Volumens in Abhängigkeit der Strömungsgeschwindigkeit beziehungsweise des Massenstrom des inkompressiblen Dämpferfluids durch das Tellerventil ein. So wird beispielsweise beim schnellen Einfahren des Dämpferbeins das Tellerventil von dem Dämpferfluid etwas aufgedrückt, wodurch der Massenstrom des Dämpferfluids durch das Tellerventil erhöht ist. Dadurch ist die Dämpfungskraft abgeschwächt, wodurch eine an eine jeweilige Fahrsituation angepasste Dämpfung des Fahrrads durch das Dämpferbein erzielt ist. Wäre beispielsweise das Steuerfluid inkomressibel, so wäre bei unveränderten Volumina des Steuerfluids die Lage des Steuerkolbens und somit der Öffnungsgrad des Tellerventils von der Einfahrgeschwindigkeit des Dämpferbeins abgekoppelt. Dadurch, dass mit der Einfahrgeschwindigkeit des Dämpferbeins der Öffnungsgrad des Tellerventils gesteuert ist, ergibt sich für das mit dem Dämpferbein ausgestattete Fahrrad ein sicheres und komfortables Fahren.

Bevorzugtermaßen weist der Steuerkolben eine Positivseite, an der der Druck des Steuerfluids die Vorspannung des Tellerventils in seine Schließrichtung verstärkt, und eine Negativseite auf, an der der Druck des Steuerfluids die Vorspannung des Tellerventils in seine Schließrichtung abschwächt. Dabei ist der Steuerkolben von der Druckbeaufschlagungseinrichtung bevorzugt so mit dem Steuerfluid an der Positivseite und/oder der Negativseite beaufschlagt, dass beim Verfahren des Dämpferbeins vor dem Detektieren des vorherbestimmten Verfahrenszustands der Druckunterschied des Steuerfluids über den Steuerkolben konstant ist und ab dem Detektieren des vorherbestimmten Verfahrzustands entsprechend dem Einfahrgrad des Dämpferbeins zunimmt. Von der Nullstellung des Dämpferbeins bis zum Detektieren des vorherbestimmten Verfahrzustands ist bevorzugt der Druckunterschied des Steuerfluids über den Steuerkolben konstant, insbesondere Null. Durch diese bevorzugten Ausgestaltungen des erfindungsgemäßen Federbeins wird vorteilhaft erreicht, dass ausgehend von einem Negativeinfahrweg, der sich einstellt, wenn eine Person sich auf das Fahrrad setzt, beim Durchfahren durch ein Schlagloch mit dem Fahrrad die Dämpfungskraft konstant, insbesondere Null, ist und beim Hinauffahren auf einen Bordstein mit dem Fahrrad die Dämpfungskraft zunimmt, sowie beim Herunterfahren von dem Bordstein die Dämpfungskraft konstant auf dem hohen Niveau bleibt, auf dem es zuletzt beim Hinauffahren auf den Bordstein am höchsten war.

Die Negativseite ist bevorzugt mit der Atmosphäre beaufschlagt, so dass das Tellerventil mit dem Steuerkolben vorspannbar ist. Alternativ oder zusätzlich ist bevorzugt die Fläche der Positivseite größer als die der Negativseite, so dass das Tellerventil mit dem Steuerkolben ebenfalls vorspannbar ist. Ist das Tellerventil vorgespannt, so entstehen beim Durchströmen des Tellerventils von dem Steuerfluid Strömungsverluste, wodurch ein Sockelniveau der Dämpfungskraft erzielt ist.

Die Druckbeaufschlagungseinrichtung weist bevorzugt eine Positivschieberkupplung und einen Positivschieber mit Auf-Zu-Schieberstellungen auf, der an der Positivseite zur Druckbeaufschlagung des Steuerkolbens so angeordnet ist, dass durch eine Betätigung der Positivschieberkupplung unter Abtrennen der Positivseite von dem Steuerfluidreservoir mit dem Positivschieber ein Positivvolumen an der Positivseite isolierbar ist. Sobald das Positivvolumen an der Positivseite isoliert ist, ist in dem Positivvolumen das Steuerfluid eingeschlossen und wirkt dadurch auf den Steuerkolben als ein konstantes Gaspolster. Dadurch ist der Steuerkolben von dem Steuerfluid, das in dem Positivvolumen isoliert ist, federnd gelagert, wodurch bei sich erhöhendem Massenstrom des Dämpferfluids durch das Tellerventil sich der Öffnungsgrad desselben vergrößert. Alternativ ist es bevorzugt, dass statt des Positivschiebers eine verstellbares Positivdrosselorgan vorgesehen ist, dessen Strömungsquerschnitt analog zu den Auf-Zu-Sieberstellungen des Positivschiebers vergrößerbar und verkleinerbar sind.

Ferner weist bevorzugt die Druckbeaufschlagungseinrichtung eine Negativschieberkupplung und einen Negativschieber mit Auf-Zu-Schieberstellungen auf, der an der Negativseite zur Druckbeaufschlagung des Steuerkolbens so angeordnet ist, dass durch Betätigung der Negativschieberkupplung unter Abtrennen der Negativseite von dem Steuerfluidreservoir mit dem Negativschieber ein Negativvolumen an der Negativseite isolierbar ist. Somit bewirkt analog zu dem im Positivvolumen eingeschlossenen Steuerfluid das in dem Negativvolumen eingeschlossene Steuerfluid eine federnde Lagerung des Steuerkolbens. Ist beispielsweise das Positivvolumen isoliert und das Negativvolumen nicht isoliert, so wird die federnde Lagerung des Steuerkolbens von dem im Positivvolumen eingeschlossenen Steuerfluid bestimmt. Analog wird die federnde Lagerung des Steuerkolbens von dem im Negativvolumen eingeschlossenen Steuerfluid bestimmt, wenn das Positivvolumen nicht isoliert ist. Somit kann vorteilhaft durch die entsprechende Isolierung des Positivvolumens und/oder des Negativvolumens die federnde Lagerung des Steuerkolbens definiert werden. Alternativ ist es bevorzugt, dass statt des Negativschiebers eine verstellbares Negativdrosselorgan vorgesehen ist, dessen Strömungsquerschnitt analog zu den Auf-Zu-Sieberstellungen des Negativschiebers vergrößerbar und verkleinerbar sind.

Die Druckbeaufschlagungseinrichtung weist bevorzugt eine Volumenjustiereinrichtung für das Positivvolumen und/oder das Negativvolumen auf, mit dem das Volumen des Positivvolumens bzw. des Negativvolumens einstellbar ist. Somit kann vorteilhaft mit der Volumenjustiereinrichtung die Steifigkeit der federnden Lagerung des Steuerkolbens eingestellt werden. Ferner weist die Druckbeaufschlagungseinrichtung einen Positivschieberkolben auf, mit dem das Positivvolumen begrenzt ist und der den Positivschieber bildet, wobei unter Betätigung der Positivschieberkupplung das Positivvolumen bei dem einfahrenden Dämpferbein verkleinerbar ist. Dadurch wirkt der Positivschieberkolben bei zunehmendem Einfahrweg des Dämpferbeins verstärkend auf die Dämpfungskraft, die bei dem stark eingefahrenen Dämpferbein überproportional groß ist.

Der Stoßdämpfer weist bevorzugt einen Dämpferzylinder und einen in diesem verschiebbar angeordneten Dämpferkolben auf, der in dem Dämpferzylinder das Dämpfervolumen abgrenzt, wobei beim Verfahren des Stoßdämpfers mit dem Dämpferzylinder die Positivschieberkupplung und/oder die Negativschieberkupplung angetrieben sind. Alternativ oder zusätzlich weist der Stoßdämpfer eine Dämpferkolbenstange auf, mit der der Dämpferkolben von außerhalb des Dämpferzylinders verschiebbar ist, wobei beim Verfahren des Stoßdämpfers mit der Dämpferkolbenstange die Positivschieberkupplung und/oder die Negativschieberkupplung angetrieben sind.

Außerdem weist der Stoßdämpfer bevorzugt eine mit dem Dämpferzylinder dämpferfluidleitend verbundene und zum Volumenausgleich von der zeitlich variablen Verdrängung des Dämpferfluids durch die Dämpferkolbenstange beim Verfahren des Dämpferbeins vorgesehene Ausgleichskammer auf, wobei beim Verfahren des Stoßdämpfers durch den an einer Engstelle von dem verdrängten Dämpferfluid erzeugten Strömungswiderstand die Positivschieberkupplung und/oder die Negativschieberkupplung angetrieben sind. Außerdem weist bevorzugt alternativ oder zusätzlich der Stoßdämpfer ein Trennelement auf, das in der Ausgleichskammer verschiebbar angeordnet ist und mit dem die Ausgleichskammer abgegrenzt ist, wobei mit dem Trennelement durch dessen Verschiebung der Volumenausgleich bewerkstelligbar ist, wobei beim Verfahren des Stoßdämpfers mit dem Trennelement die Positivschieberkupplung und/oder die Negativschieberkupplung angetrieben sind. Dadurch sind vorteilhaft die Positivschieberkupplung und/oder die Negativschieberkupplung in Abhängigkeit des Verfahrens des Dämpferbeins angetrieben, wobei der Verfahrgrad und die Verfahrgeschwindigkeit des Federbeins entsprechend das Antreiben der Positivschieberkupplung und/oder der Negativschieberkupplung bestimmen.

Bevorzugt ist das Tellerventil in der Zuströmung des Dämpferfluids zur Ausgleichskammer angeordnet. Ferner ist es bevorzugt, dass das Tellerventil am Dämpferkolben in Reihe zu einem Dämpferloch des Dämpferkolbens angeordnet ist. Der vorherbestimmte Verfahrzustand ist bevorzugt ein vorherbestimmter Hubwert des Stoßdämpfers und die Positivkupplung und/oder die Negativkupplung sind bevorzugt eingerichtet einen Wechsel der Schieberstellung beim Detektieren des Hubwerts zu bewirken. Ferner ist es bevorzugt, dass der vorherbestimmte Verfahrzustand eine Richtungsänderung beim Verfahren des Stoßdämpfers ist und die Positivkupplung und/oder die Negativkupplung bevorzugt eingerichtet sind, einen Wechsel der Schieberstellung beim Auftreten der Richtungsänderung zu bewirken.

Im Folgenden werden bevorzugte Ausführungsformen des erfindungsgemäßen Dämpferbeins anhand der beigefügten schematischen Zeichnungen erläutert. Es zeigen:
Figuren 1 und 2 schematische Darstellungen von Ausführungsformen des erfindungsgemäßen Dämpferbeins jeweils für eine Druckstufe,
Figuren 3 bis 8 schematische Darstellungen von Ausführungsformen des erfindungsgemäßen Dämpferbeins jeweils für eine Zugstufe,
Figur 9 einen Querschnitt einer Ausführungsform des erfindungsgemäßen Dämpferbeins mit einer Schraubenfeder,
Figur 10 einen Querschnitt einer Ausführungsform des erfindunsgemäßen Dämpferbeins mit einer Gasdruckfeder,
Figuren 11 bis 13 Detaildarstellungen aus Figur 10 und
Figuren 14 bis 17 Querschnitte eines Dämpferkolbens mit einer Dämpferkolbenstange und eines Tellerventils als Ausführungsformen für das erfindungsgemäße Dämpferbein.

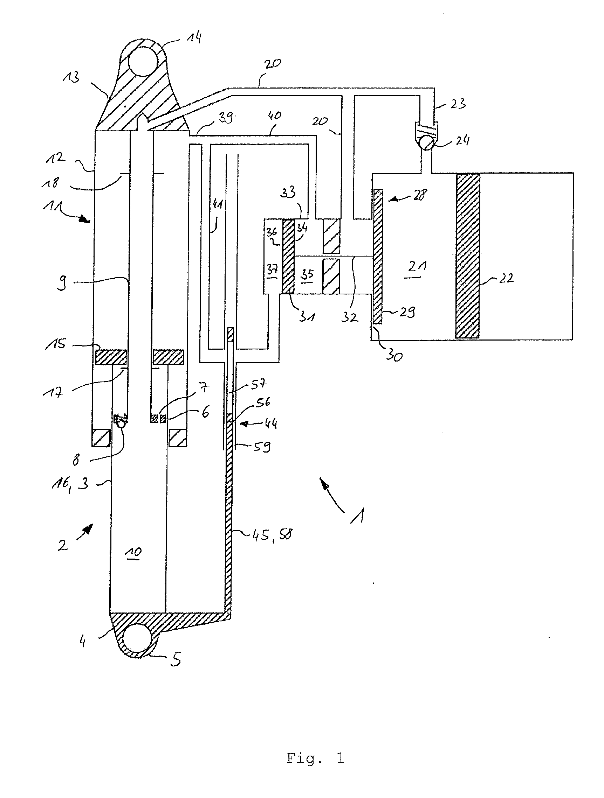

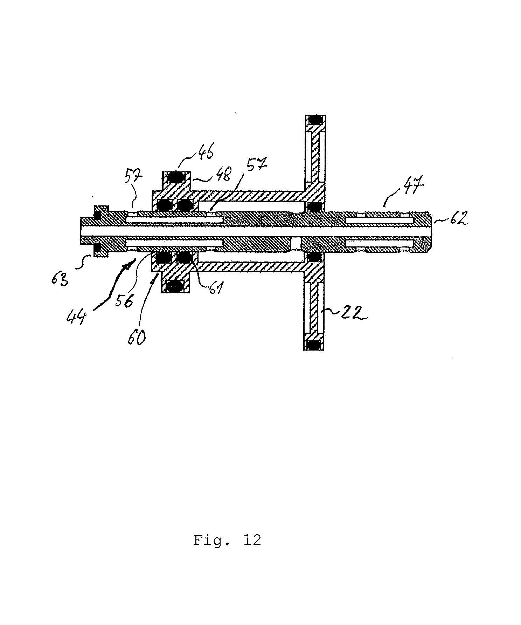

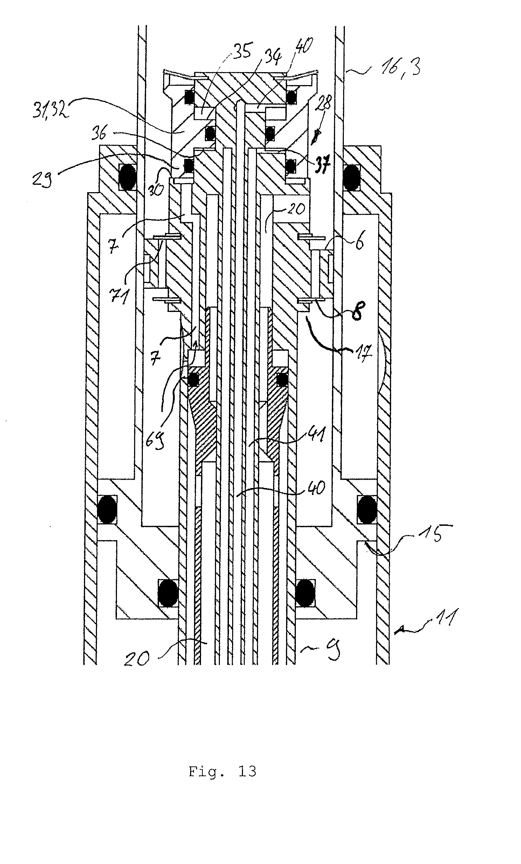

Wie es aus Figuren 1 bis 17 ersichtlich ist, weist ein Dämpferbein 1 einen Stoßdämpfer 2 auf.

Der Stoßdämpfer 2 ist direkt anlenkbar und wird beim Ausfahren auf Zug und beim Einfahren auf Druck beansprucht. Die vom Stoßdämpfer 2 bewirkte Dämpfung beim Ausfahren ist als eine Zugstufe und die vom Stoßdämpfer 2 bewirkte Dämpfung beim Einfahren wird als eine Druckstufe bezeichnet. Der Stoßdämpfer 2 weist einen Dämpferzylinder 3 auf, der an seinem einen Längsende als ein Dämpferzylinderkopf 4 ausgebildet ist, an dem ein Laufradauge 5 ausgebildet ist. Das Dämpferbein 1 ist für ein Fahrrad vorgesehen, so dass an dem Laufradauge 5 das Vorder- oder das Hinterrad des Fahrrads angebaut ist.

In dem Dämpferzylinder 3 ist ein Dämpferkolben 6 längsverschiebbar angeordnet, wobei in dem Dämpferkolben 6 ein als ein Durchgangsloch ausgebildeter Durchlass 7 und in Parallelschaltung zum Durchlass 7 ein Zugstufenventil 8 vorgesehen sind. Das Zugstufenventil 8 ist von einer mit einer Schraubenfeder vorgespannten Kugel ausgebildet, die in einem weiteren Durchgangsloch in dem Dämpferkolben 6 eingebaut sind, wobei dieses Durchgangsloch einen größeren Durchmesser als der Durchlass 7 hat. Der Dämpferkolben 6 ist an einer Dämpferkolbenstange 9 angebracht, die in dem Dämpferzylinder 3 von dem Dämpferzylinderkopf 4 abgewandt sich erstreckt. Das von dem Dämpferzylinder 3 und dem Dämpferkolben 6 eingeschlossene Dämpfervolumen 10 ist mit einer inkompressiblen Dämpferflüssigkeit, insbesondere Öl, gefüllt. Unter Betätigung der Dämpferkolbenstange 9 ist der Dämpferkolben 6 in den Dämpferzylinder 3 längsverschiebbar, so dass durch die entsprechende Position des Dämpferkolbens 6 die Größe des Dämpfervolumens 10 bestimmt ist.

Die Kugel und die Schraubenfeder des Zugstufenventils 8 sind derart angeordnet, dass die Kugel von der Schraubenfeder in Richtung zu dem Dämpferzylinderkopf 4 vorgespannt ist. Wird der Dämpferkolben 6 in Richtung zu dem Zylinderkopf bewegt, verkleinert sich das Dämpfervolumen 10 und das Dämpferfluid drückt das Zugstufenventil 8 in seine Offenstellung, so dass überschüssige Dämpferflüssigkeit durch das Zugstufenventil 8 abfließen kann. Durch den Durchlass 7 tritt ebenfalls überschüssige Dämpferflüssigkeit, jedoch ist der Massenstrom an der Dämpferflüssigkeit durch den Durchlass 7 geringer als durch das Zugstufenventil 8, da der Strömungsquerschitt des Zugstufenventils 8 größer ist als der des Durchlasses 7. Beim Durchströmen der Dämpferflüssigkeit durch das Zugstufenventil 8 entstehen nur geringe Strömungsverluste, so dass die beim Einfahren des Dämpferkolbens 6 entgegenwirkende, durch die Strömungsverluste erzeugte Dämpfungskraft gering ist. Im Gegensatz dazu ist beim Verfahren des Dämpferkolbens 6 weg von dem Zylinderkopf 4 das Zugstufenventil 8 in dessen Geschlossenstellung, so dass die überschüssige Dämpferflüssigkeit lediglich durch den Durchlass 7 passiert. Damit einher gehen hohe Strömungsverluste in der Dämpferflüssigkeitsströmung, so dass die dem Dämpferkolben 6 entgegenwirkende Dämpfungskraft hoch ist.

Ferner weist das Dämpferbein 1 eine Gasdruckfeder 11 auf, die von einem Gasdruckfederzylinder 12 mit einem Gasdruckfederzylinderkopf 13 gebildet ist. Am Gasdruckfederzylinder 13 ist ein Rahmenauge 14 ausgebildet, mit dem das Dämpferbein an dem Rahmen des Fahrrads montierbar ist. Somit ist von dem Dämpferbein 1 die Aufhängung des Rads am Rahmen des Fahrrads bewerkstelligt. In dem Gasdruckfederzylinder 12 ist ein Gasdruckfederkolben 15 längsverschiebbar angeordnet, wobei von dem Gasdruckfederkolben 15 und dem Gasdruckfederzylinder 12 ein Gasdruckfedervolumen eingeschlossen ist, das mit einem Federgas gefüllt ist. Aufgrund der Kompressibilität des Federgases hat die Gasdruckfeder 11 eine Federcharakteristik.

An dem anderen, dem Dämpferzylinderkopf 4 abgewandten Längsende des Dämpferzylinders 3 ist der Gasdruckfederkolben 15 angeordnet, wobei die Dämpferkolbenstange 9 durch den Gasdruckfederzylinder 12 sich erstreckt und ihrem dem Dämpferkolben 6 abgewandten Längsende am Gasdruckfederzylinderkopf 13 befestigt ist, so dass der Stoßdämpfer 2 und die Gasdruckfeder 11 teleskopartig ineinander verfahrbar sind. An der Dämpferkolbenstange 9 sind ein erster Gasdruckfederkolbenanschlag 17 und ein zweiter Gasdruckfederkolbenanschlag 18 vorgesehen, wobei der Abstand von den Gasdruckfederkolbenanschlägen 17, 18 den maximal möglichen Verfahrweg des Gasdruckfederkolbens 15 definieren. Liegt der Gasdruckfederkolben 15 am ersten Gasdruckfederkolbenanschlag 17 an, ist das Federbein 1 in seiner Ausfahrstellung, und liegt der Gasdruckfederkolben 15 am zweiten Gasdruckfederkolbenanschlag 18 an, ist das Dämpferbein 1 in seiner Einfahrstellung. Wird beispielsweise bei einer Fahrt über unebenes Gelände mit dem Fahrrad das Dämpferbein 1 mit großer Wucht eingefahren, besteht die Gefahr, dass der Gasdruckfederkolben 15 an den zweiten Gasdruckfederkolbenanschlag 18 prallt, wodurch der Fahrkomfort stark beeinträchtigt ist und die Gefahr einer Beschädigung des Dämpferbeins 1 herrührt.

In Figur 1 ist eine erste Druckstufe des Dämpferbeins 1 gezeigt. Dadurch, dass die Dämpferkolbenstange 9 in den Dämpferzylinder 3 ragt, ergibt sich eine Verdrängungswirkung der Dämpferkolbenstange 9 in Abhängigkeit der Lage des Dämpferkolbens 6. Hierfür weist der Stoßdämpfer 2 eine Ausgleichsleitung 20 auf, mit der das Dämpfervolumen 10 mit einer Ausgleichskammer 21 dämpferflüssigkeitsleitend verbunden ist. Die Dämpferkolbenstange 9 ist hohl ausgebildet, wobei die Ausgleichsleitung 20 im Gasdruckfederzylinderkopf 13 in das Innere der Dämpferkolbenstange 9 mündet. Beim Einfahren des Dämpferzylinders 6 in den Dämpferzylinder 3 wird von der Dämpferkolbenstange 9 zunehmend Dämpferflüssigkeit verdrängt, dessen Überschuss via die Dämpferkolbenstange 9 und die Ausgleichsleitung 20 in die Ausgleichskammer 21 geleitet wird. Die Ausgleichskammer 21 weist ein verschiebbares Trennelement 22 auf, dessen Lage das Volumen der Ausgleichskammer 21 so bestimmt, dass die überschüssige Dämpferflüssigkeit in der Ausgleichskammer 21 gelagert ist. Ist das Dämpferbein 1 in der Einfachstellung, ist das Trennelement 22 in der einen Extremlage angeordnet, durch die das Maximalvolumen der Ausgleichskammer 21 definiert ist. Ist hingegen das Dämpferbein 1 in der Ausfahrstellung, ist das Trennelement 22 in der anderen Extremlage angeordnet, durch das Minimalvolumen der Ausgleichskammer 21 definiert ist.

Zum Ausströmen von der Dämpferflüssigkeit aus der Ausgleichskammer 21 ist eine Rückströmleitung 23 vorgesehen, die von der Ausgleichskammer 21 in die Ausgleichsleitung 20 mündet. In der Rückströmleitung 23 ist ein Rückströmventil 24 vorgesehen, das nur in Rückströmrichtung von der Ausgleichskammer 21 zu dem Dämpfervolumen 10 hin geöffnet ist. Am Eintritt der Ausgleichsleitung 20 in die Ausgleichungsleitung 21 ist ein Tellerventil 28 angeordnet, dessen Teller 29 in der Ausgleichskammer 21 so angeordnet ist, dass von dem Tellerventilsitz 30 des Tellers 29 ein Eintrittsquerschnitt für die Dämpferflüssigkeitsströmung in die Ausgleichskammer 21 definiert ist. Beim Durchströmen der Dämpferflüssigkeit durch den Eintrittsquerschnitt des Tellerventils 28 am Tellerventilsitz 30 entstehen Strömungsverluste, die entsprechend der Position des Tellers 29 und dem sich daraus ergebenden Eintrittsöffnungsgrad ergeben. Ist an dem Ventilsitz 30 ein kleiner Strömungsquerschnitt vorgegeben, sind die Strömungsverluste hoch, wohingegen bei einem großen Strömungsquerschnitt am Tellerventil 28 die Strömungsverluste klein oder sogar Null sind. Mit dem Teller 29 ist ein Steuerkolben 31 via eine Steuerkolbenstange 32 gekuppelt, wobei der Steuerkolben 31 in einem Steuerkolbenzylinder 33 verschiebbar angeordnet ist. Der Steuerkolben 31 weist an einer dem Teller 29 zugewandten Seite eine Positivseite 34 und an seiner dem Teller 29 abgewandten Seite eine Negativseite 36 auf. Von dem Steuerkolbenzylinder 33 und der Positivseite 34 ist ein Positivvolumen 35 und von der Negativseite 36 und dem Steuerkolbenzylinder 33 ist ein Negativvolumen 37 definiert.

Der Steuerkolbenzylinder 33 ist via eine Druckbeaufschlagungsleitung 39 mit dem Inneren des Gasdruckfederzylinders 12 gasleitend verbunden, wobei von der Druckbeaufschlagungsleitung 39 eine Positivleitung 40 zu dem Positivvolumen 35 und eine Negativleitung 41 zu dem Negativvolumen 37 abgezweigt ist. Mit der Druckbeaufschlagungsleitung 39, der Positivleitung 40 und der Negativleitung 41 sind das Positivvolumen 35 und das Negativvolumen 37 gasleitend miteinander verbunden, so dass an dem Steuerkolben 31 zwischen der Positivseite 34 und der Negativseite 36 kein Druckunterschied anliegt. Außerdem ist der Steuerkolben 31 in dem Steuerkolbenzylinder 33 ohne der Erzeugung von Druckunterschieden bewegbar, da via die Druckbeaufschlagungsleitung 39, die Positivleitung 40 und die Negativleitung 41 zwischen der Positivseite 34 und der Negativseite 36 stets ein Druckausgleich stattfindet. Somit ist der Teller 29 des Tellerventils 28 so gut widerstandsfrei in der Ausgleichskammer 21 bewegbar, so dass der Öffnungsgrad des Tellerventils 28 an dem Tellerventilsitz 30 von den Strömungsverhältnissen der Dämpferflüssigkeit aus der Ausgleichsleitung 20 in die Ausgleichskammer 21 bestimmt ist.

Ferner weist das Dämpferbein 1 einen Negativschieber 44 auf, der direkt an den Dämpferzylinderkopf 4 mittels einer Negativschieberkupplung 45 angelenkt ist, die mit einer Schubstange 58 ausgebildet ist. Der Negativschieber 44 weist eine Schieberplatte 56 auf, in der eine Schieberöffnung 57 angebracht ist, wobei die Schieberplatte 56 in einer Führung 59 längsgeführt ist. Der Negativschieber 44 ist in der Negativleitung 41 derart eingebaut, dass bei einem Unterschreiten eines vorherbestimmten Hubwegs des Dämpferbeins 1 die Schieberöffnung 57 im Durchfluss der Negativleitung 41 angeordnet ist, wohingegen bei Überschreiten des vorherbestimmten Hubwegs des Dämpferbeins 1 die Schieberöffnung 57 aus dem Durchflussbereich der Negativleitung 41 herausgetreten ist, wodurch von der Schieberplatte 56 der Durchfluss der Negativleitung 51 versperrt ist. Dadurch ist der Negativschieber 44 in seinen Sperrzustand gebracht, wodurch das Negativvolumen 37 von der Druckbeaufschlagungsleitung 39 isoliert ist.

In der Ausfahrstellung des Dämpferbeins 1 ist der Negativschieber 44 in der Offenstellung, so dass der Steuerkolben 31 druckunterschiedsfrei den Teller 29 bewegen kann. Wird beim Einfahren des Dämpferbeins 1 der vorherbestimmte Hubweg erreicht, ist der Negativschieber 44 in der Schließstellung, in der er in jeder Stellung des Dämpferbeins 1 verbleibt, die zwischen dem vorherbestimmten Hubweg und der Einfahrstellung liegt. Dabei liegt in Abhängigkeit des jeweiligen Hubs der Gasdruckfeder am Steuerkolben ein Druckunterschied an, der zu einer Schließkraft des Tellerventils 28 führt. Je stärker das Dämpferbein 1 eingefahren ist, desto höher ist der Druckunterschied am Steuerkolben 31 und desto größer ist die von dem Steuerkolben 31 auf das Tellerventil 28 übertragene Schließkraft des Tellerventils 28. Je größer die Schließkraft des Tellerventils 28 ist, desto kleiner ergibt sich der Öffnungsgrad am Tellerventilsitz 30, so dass in der Einfahrstellung des Dämpferbeins 1 die Strömungsverluste am Tellerventilsitz 30 am größten sind.

Beim Einfahren des Dämpferbeins 1 von der Ausfahrstellung bis zu dem vorherbestimmten Hubweg ist die Dämpfungskraft konstant, die vom vorherbestimmten Hubweg bis zur Einfahrstellung zunimmt. Dadurch wird erreicht, dass das Dämpferbein 1 eine derartige Dämpfungscharakteristik hat, wobei beim Fahren mit dem Fahrrad über unebenes Gelände der maximale Hubweg des Dämpferbeins 1 effektiv ausgenutzt wird und ein Durchschlagen des Dämpferbeins 1 unterbunden ist. Bei Verfahrsituationen des Dämpferbeins 1 von der Ausfahrstellung bis zu dem vorherbestimmten Hubweg ist die Dämpfungskraft aufgrund der Strömungsverhältnisse am Durchlass 7 des Dämpferkolbens 6 bestimmt, wobei bei einer kleinen Einfahrgeschwindigkeit die Dämpfungskraft klein und bei einer großen Einfahrgeschwindigkeit die Dämpfungskraft groß ist. Wird der vorherbestimmte Hubweg erreicht, so wird von dem Tellerventil 28 unter Ansteuerung mit dem Steuerkolben 31 in dem überschüssigen aus dem Dämpfervolumen 10 ausströmenden Dämpferfluid eine zusätzliche Dämpfungskraft an den Tellerventilsitz 30 erzeugt.

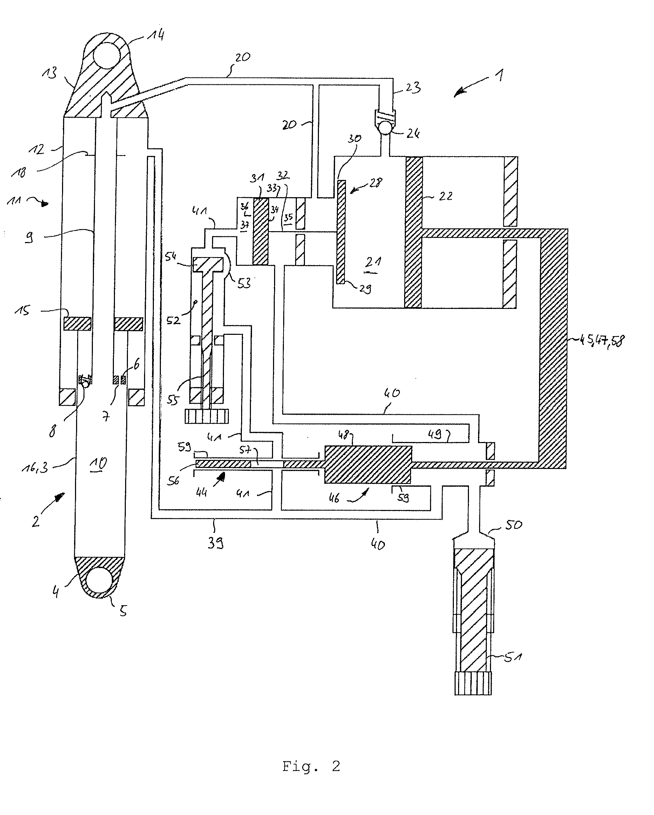

In Fig. 2 ist eine zweite Druckstufe des Dämpferbeins 1 gezeigt. Im Gegensatz zur ersten Druckstufe gemäß Fig. 1 weist die zweite Druckstufe die Negativschieberkupplung 45 als die Schubstange 58 auf, die an das Trennelement 22 angelenkt ist. Ferner weist das Dämpferbein 1 einen Positivschieber 46 auf, der in die Positivleitung 40 eingebaut ist. Der Positivschieber 46 ist mit einer Positivschieberkupplung 47 angetrieben, die von der Negativschieberkupplung 45 gebildet ist. Ferner weist der Positivschieber 46 einen Positivschieberkolben 48 auf, der in einem Positivschieberzylinder 49 verschiebbar angeordnet ist. Der Positivschieber 46 ist derart ausgestaltet, dass der Positivschieberkolben 48 in dem Positivschieberzylinder 49 und in die Positivleitung 40 derart eingebaut ist, dass bei Erreichen eines zweiten vorherbestimmten Hubwegs, der größer als der erste vorherbestimmte Hubweg ist, der Positivschieber 46 von der Offenstellung in die Schließstellung gebracht wird, wodurch das Positivvolumen 35 von der Druckbeaufschlagungsleitung 39 isoliert ist. Wird das Dämpferbein 1 von dem zweiten vorherbestimmten Hubweg in die Einfahrstellung gebracht, so wird der Positivschieberkolben 48 weiter in den Positivschieberzylinder 49 bewegt, wodurch das Positivvolumen 35 sich verkleinert und der Druck an der Positivseite 34 des Steuerkolbens 31 vergrößert wird. Der Positivschieberkolben 48 und das Trennelement 22 sind in ihren Querschnittsflächen derart ausgebildet, dass in dem Positivvolumen 35 die Druckzunahme einen größeren Gradienten hat, verglichen mit der ersten Druckstufe gemäß Figur 1. Dadurch wirkt der Positivschieberkolben 48 des Positivschiebers 46 weiter verstärkend auf die vom Tellerventil 28 erzeugte Dämpfungskraft des Dämpferbeins bei Erreichen von entsprechend großen Hubwegen des Dämpferbeins 1.

An das Positivvolumen 35 angeschlossen ist ein Positivvariationsvolumen 50, dessen Größe mit einer Positivverstellschraube 51 einstellbar ist. Dadurch kann mit Hilfe der Positivverstellschraube 51 die Größe des Positivvolumens 35 eingestellt werden. Ist der Positivschieber 46 in der Schließstellung, hat die Größe des Positivvolumens 35 einen Einfluss auf die Verstärkungswirkung des Positivschieberkolbens 48, nämlich je größer das Positivvolumen 35 ist, desto flacher ist der Gradient der Verstärkungswirkung des Positivschieberkolbens 48 auf die von dem Tellerventil 28 erzeugte Dämpfungskraft.

In der Negativleitung 41 ist ein Negativvariationsvolumen 52 vorgesehen, in dem ein Negativkolben 54 mit einer Umgehung 53 angeordnet ist. Der Negativkolben 54 ist von einer Negativvariationsschraube 55 verschiebbar, wobei in der Stellung des Negativkolbens 54, in der das Negativvolumen minimal ist, die Umgehung 53 passierbar geschaltet ist, wodurch das Negativvolumen 37 mit der Druckbeaufschlagungsleitung 39 gasleitend verbunden ist. Wird die Negativvariationsschraube 55 verstellt, verschließt der Negativkolben 54 die Umgehung 53, so dass das Negativvolumen 37 von der Druckbeaufschlagungsleitung 39 isoliert ist, wobei mit einer entsprechenden Lage des Negativkolbens 54 das Negativvariationsvolumen 52 definierbar ist.

Ist von dem Negativkolben 54 die Umgehung 53 verschlossen, so liegt entsprechend der Größe des Negativvariationsvolumens 52 an der Negativseite 36 am Steuerkolben 31 ein entsprechender Druck an. Dadurch, dass die Negativvariationsschraube 55 so angeordnet ist, dass bei der Betätigung der Negativvariationsschraube 55 das Negativvariationsvolumen 52 lediglich vergrößerbar ist, stellt sich am Steuerkolben 31 stets ein Druckunterschied ein, der am Tellerventil 28 in dessen Schließrichtung wirkt. Somit ist es möglich, dass unter Betätigung der Negativvariationsschraube 55 das Tellerventil 28 vorgespannt ist, wodurch mit dem Tellerventil 28 eine zusätzliche, vom Hub des Dämpferbeines 1 unabhängige, Dämpfungskraft erzeugt wird. Besonders vorteilhaft ist die Anlenkung der Negativschieberkupplung 45 und/oder der Positivschieberkupplung 47 durch das Trennelement 22 für das Dämpferbein 1 bei unterschiedlichen Maximalhubausführungen, da durch eine Anpassung des Verhältnisses der wirksamen Fläche des Trennelementes 22 zu der Querschnittsfläche der Kolbenstange 9, insbesondere durch eine Größenanpassung der wirksamen Fläche des Trennelementes 22 zum Querschnitt der Kolbenstange 9, ein gleiches Hubverhalten des Trennelementes 22 einstellbar ist, wodurch die durch das Trennelement 22 angelenkten Kupplungen 45, 47 und damit auch die Komponenten 44, 46,48,49,50,51 und 52 für alle Dämpferbeinlängen identisch ausgeführt werden können.

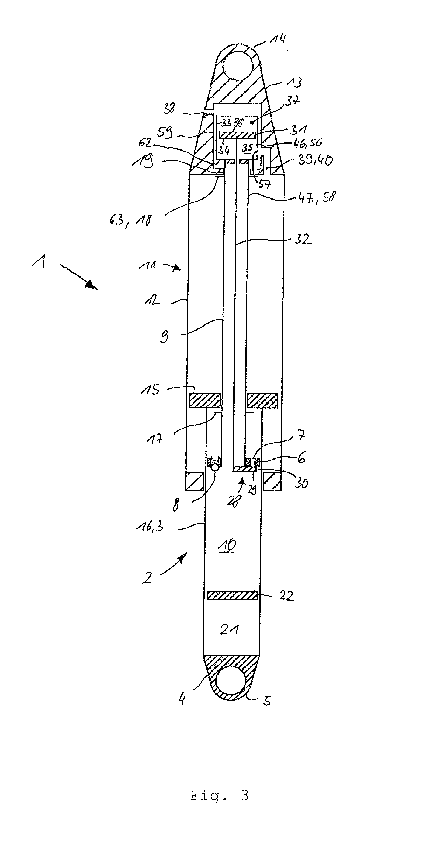

In Fig. 3 ist eine erste Zugstufe des Dämpferbeins 1 gezeigt. Gemäß der ersten Zugstufe ist das Tellerventil 28 am Dämpferkolben 6 angeordnet, wobei von dem Teller 29 der Durchlass 7 verschließbar ist. Der Tellerventilsitz 30 ist dem Durchlass 7 hin zugewandt angeordnet, so dass am Tellerventilsitz 30 der Öffnungsgrad des Tellerventils 28 eingestellt ist. Die Steuerkolbenstange 32 erstreckt sich durch die Dämpferkolbenstange 9 und ist darin längsverschiebbar angeordnet. Im Gasdruckfederzylinderkopf 13 ist der Steuerkolbenzylinder 33 angeordnet, in dem der Steuerkolben 31 längsverschiebbar gelagert ist. Der Gasdruckfederzylinderkopf 13 weist eine Atmosphärenöffnung auf, mit der das Negativvolumen 37 mit der Atmosphäre verbunden ist, wodurch die Negativseite 36 des Steuerkolbens 31 atmosphärenbeaufschlagt ist. Ferner ist in dem Gasdruckfederzylinderkopf 13 die Druckbeaufschlagungsleitung 39 vorgesehen, mit der die Positivseite 34 des Steuerkolbens 31 mit dem Inneren des Gasdruckfederzylinders 12 gasleitend verbunden ist.

Außerdem weist der Gasdruckfederzylinderkopf 13 ein Gasdruckfederkolbenstangenlager 19 auf, in dem die Dämpferkolbenstange 9 längsverschiebbar gelagert ist. Die Längsverschiebung der Dämpferkolbenstange 9 ist von zwei Anschlägen 62, 63 begrenzt, die an der Dämpferkolbenstange 9 abstehend befestigt sind und in deren Zwischenraum das Gasdruckfederkolbenstangenlager 19 eingreift. Der erste Anschlag 62 ist von dem zweiten Gasdruckfederkolbenanschlag 18 gebildet, so dass die Längsverschiebung der Dämpferkolbenstange 9 in Richtung aus dem Dämpferzylinder 3 heraus begrenzt ist, wohingegen die Bewegung der Dämpferkolbenstange 9 in den Dämpferzylinder 3 von dem zweiten Anschlag 63 begrenzt ist. Der Positivschieber 46 ist an der Dämpferkolbenstange 9 angebracht, wobei die Schieberplatte 56 und ihre Schieberöffnung 57 derart angeordnet sind, dass, wenn die Dämpferkolbenstange 9 mit ihrem zweiten Anschlag 63 an dem Gasdruckfederkolbenstangenlager 19 anliegt, die Positivseite 35 via die Druckbeaufschlagungsleitung 39 mit dem Inneren des Gasdruckfederzylinders 12 gasleitend verbunden ist, und, wenn die Dämpferkolbenstange 9 mit ihrem ersten Anschlag 62 an dem Gasdruckfederkolbenstangenlager 19 anliegt, der Positivschieber 46 die Druckbeaufschlagungsleitung 39 versperrt.

Beim Verfahren des Dämpferbeins 1 wirkt am Dämpferkolben 6 hervorgerufen durch die Dämpferflüssigkeit ein hydrodynamischer Widerstand, so dass beim Einfahren des Dämpferbeins 1 der zweite Anschlag 63 am Gasdruckfederkolbenstangenlager 19 und beim Ausfahren des Dämpferbeins 1 der erste Anschlag 32 am Gasdruckfederkolbenstangenlager 19 anliegt. Somit ist beim Einfahren des Dämpferbeins 1 der Positivschieber 46 in seiner Offenstellung, wohingegen beim Ausfahren des Dämpferbeins 1 der Positivschieber 46 in seiner Geschlossenstellung ist. Wird beispielsweise das Dämpferbein 1 zuerst eingefahren, so erhöht sich der Druck in dem Positivvolumen 35 kontinuierlich, so dass die Vorspannung des Tellerventils 28 analog kontinuierlich zunimmt. Wird dann das Dämpferbein 1 ausgefahren, wird der Positivschieber 46 in seine Geschlossenstellung gebracht, wobei der Druck in dem Positivvolumen 35 und somit die Vorspannung des Tellerventils 28 konstant bleibt. Bei einem weiteren darauffolgenden Einfahren des Dämpferbeins 1 wird der Positivschieber 46 wieder in seine Offenstellung gebracht, wodurch ein Druckausgleich zwischen dem Positivvolumen 35 und dem Inneren des Gasdruckfederzylinders 12 stattfinden kann. Somit wird bei Einfahrmanövern der Druck in dem Positivvolumen 35 akkumulierend erhöht, beim anschließenden Ausfahrmanöver der so in dem Positivvolumen 35 akkumulierte Druck, und damit die über die Steuerkolbenstange 32 auf das Tellerventil 28 aufgebrachte resultierende Schließkraft, konstant gehalten und erst zu einem erneuten eintreten des Einfahrmanövers, wird, bewirkt durch die Hubumkehr, der Druck in dem Positivvolumen 35 an den aktuellen Hubweg des Dämpferbeins 1 durch den Druckausgleich mit dem Inneren des Gasdruckfederzylinders 12 angepasst. Durch das Vorsehen der Anschläge 62, 63 und dem Gasdruckfederkolbenstangenlager 19 ist die Dämpferkolbenstange 9 derart schwimmend gelagert, dass bei einer Richtungsänderung beim Verfahren des Dämpferbeins 1 vom Einfahren zum Ausfahren der Positivschieber 46 ruckartig geschlossen und vom Ausfahren zum Einfahren ruckartig geöffnet wird.

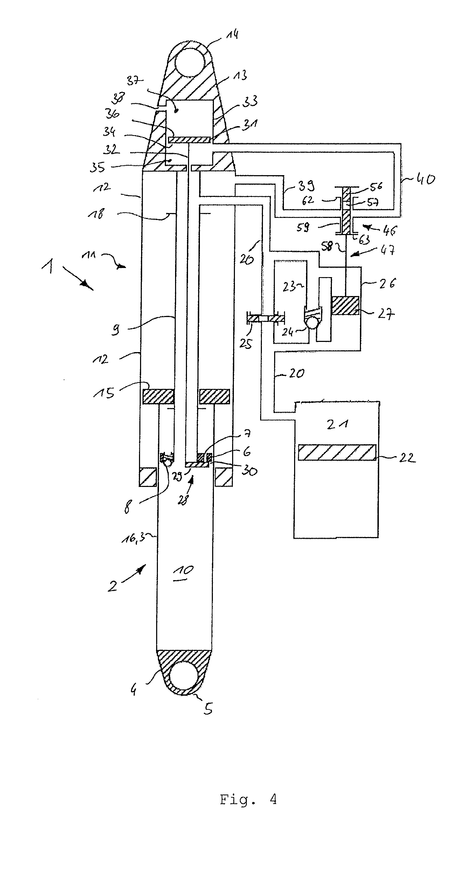

Eine zweite Zugstufe des Dämpferbeins 1 ist in Fig. 4 gezeigt. Im Gegensatz zur ersten Zugstufe aus Fig. 3 ist bei der zweiten Zugstufe die Dämpferkolbenstange 9 fest mit dem Gasdruckfederzylinder 12 verbunden. Ferner ist in der Druckbeaufschlagungsleitung 39 der Positivschieber 46 vorgesehen, der via die Positivschieberkupplung 47 von einem Sensorkolben 27 angesteuert ist. Der Sensorkolben 27 ist in einer Sensorleitung 26 längsverschiebbar angeordnet, wobei die Sensorleitung 26 eine insbesondere die Druckstufendämfung der Gasdruckfeder 11 sicherstellende Blende 25, die in der Ausgleichsleitung 20 eingebaut ist, umgeht. Der beim Durchströmen der Blende 25 entstehende Druckunterschied liegt am Sensorkolben 27 an, so dass der Positivschieber 46 entsprechend dieses Druckunterschieds geschaltet ist. Der Sensorkolben 27 und der Positivschieber 46 sind derart konfiguriert, dass beim Einfahren des Dämpferbeins 1 der Positivschieber 46 in seine Offenstellung und beim Ausfahren des Dämpferbeins 1 in seine Geschlossenstellung gebracht ist. Das Rückströmventil 24 ist in der Rückströmleitung 23 eingebaut, die parallel sowohl zur Blende 25 als auch zum Sensorkolben 27 geschaltet ist. Das Rückstellventil 24 ist beim Einfahren des Dämpferbeins 1 in seiner Geschlossenstellung und beim Ausfahren des Dämpferbeins 1, sobald die Vorspannung des Rückströmventils 24 überwunden ist, in seiner Offenstellung. Sowohl die Blende 25, als auch das diese Blende 25 umgehende Rückstromventil 24 erzeugen einen ausreichenden hydrodynamischen Druck in der Sensorleitung 26, so dass der Sensorkolben 27 beim Einfahrmanöver des Dämpferbeins 1 den Positivschieber 46 über die Positivschieberkupplung 47 öffnet und beim Ausfahrvorgang des Dämpferbeines 1 schließt.

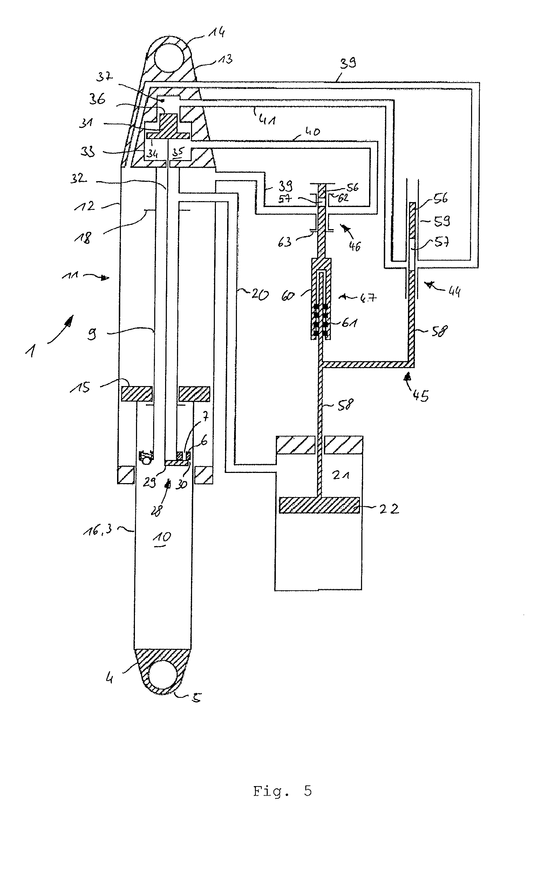

Eine dritte Zugstufe des Dämpferbeins 1 ist in Figur 5 gezeigt. Im Gegensatz zur zweiten Zugstufe gemäß Figur 4 weist die dritte Zugstufe als die Positivschieberkupplung 47 eine Rutschkupplung 60 auf, die eine Mehrzahl an hintereinander liegenden O-Ringen 61 aufweist, in die die Schubstange 58 längsverschiebbar eingreift. Die Schubstange 58 ist an das Trennelement 22 angekuppelt, so dass bei einer Richtungsänderung beim Verfahren des Dämpferbeins 1 mittels der Rutschkupplung 60 ein schlagartiger Stellungswechsel des Positivschiebers 46 erzielbar ist, nämlich bei dem Wechsel vom Einfahren zum Ausfahren von der Geschlossenstellung in die Offenstellung und beim Wechsel vom Ausfahren zum Einfahren von der Offenstellung in die Geschlossenstellung. Ferner ist in der Druckbeaufschlagungsleitung 39 der Negativschieber 44 vorgesehen, wobei die Negativschieberkupplung 45 via die Schubstange 58 von dem Trennelement 22 angetrieben ist. Die Schieberöffnung 57 in der Schieberplatte 56 ist in der Führung 59 in Bezug auf die Druckbeaufschlagungsleitung 39 derart dimensioniert und angeordnet, dass erst nach Erreichen des vorbestimmten Hubwegs der Negativschieber 44 in seiner Geschlossenstellung und davor in seiner Offenstellung ist. Weiterhin ist es bevorzugt, dass via die Schubstange 58 ein zum Positivschieber 46 parallel wirkender Umgehungschieber (nicht dargestellt) angelenkt ist, der vor Erreichen des vorbestimmten Hubwegs des Dämpferbeins 1 einen den Positivschieber 46 umgehenden Bypasskanal (nicht dargestellt) öffnet, und ihn somit vor Erreichen des vorbestimmten Hubwegs wirkungslos schaltet. Dadurch wird bewirkt, dass vor Erreichen des vorbestimmten Hubwegs der Gasdruck sowohl des Positivvolumens 35 als auch des Negativvolumens 37 gleich ist, und somit auch die Vorspannung des mit den Steuerkolben 31 und die Steuerkolbenstange 32 angesteuerten Tellerventils 28 konstant ist und damit die Zugstufendämpfung des Dämpferbeines 1 vor Erreichen des vorbestimmten Hubwegs hubunabhängig ist. Erst wenn der vorbestimmte Hubweg beim Einfahren erreicht, bzw. überschritten wird, schließt sowohl der Negativschieber 44, als auch der Umgehungsschieber. Der Positivschieber 46 wird dabei über die Rutschkupplung 60 offengehalten, wodurch der Druck in dem Positivvolumen 35 ansteigt, aber in dem Negativvolumen 37 konstant bleibt. Durch die Hubumkehr von Ein- zu Ausfahren des Dämferbeins 1, wird der Positivschieber 46 über die Rutschkupplung 60 geschlossen und somit der während der Hubumkehr in der Gasdruckfeder 11 herrschende Druck in dem Positivvolumen 35 gespeichert, wodurch während des Ausfahrens durch den Steuerkolben 31 eine konstant hohe Vorspannkraft auf das Tellerventil 28 aufgebracht und somit die Zugstufendämpfung abhängig vom maximal erreichten Einfahrhub des Dämpferbeins 1 bestimmt wird, bis das Positivvolumen 35 entweder durch eine erneute Hubumkehr des Dämpferbeins 1 vom Positivschieber 46 über die Rutschkupplung oder durch Unterschreiten des vorherbestimmten Hubes über den Bypasskanal und den bei diesem Hubwerten offen stehenden Umgehungsschieber mit dem Gasdruckfederzylinder 12 der Gasdruckfeder 11 zum Druckausgleich verbunden wird.

Der Steuerkolben 31 ist stufenartig ausgebildet, wobei die Negativseite eine kleinere Fläche als die Positivseite hat. Dadurch wird erreicht, dass selbst bei gleichen Drücken in dem Positivvolumen 35 und dem Negativvolumen 37 von dem Steuerkolben 31 auf die Steuerkolbenstange 32 eine daraus resultierende Kraft ausgeübt wird, wodurch das Tellerventil 28 stets vorgespannt ist. Genau so vorteilhaft kann durch die umgekehrte Anordnung (nicht dargestellt), nämlich durch eine größere Fläche der Negativseite 36 als der Positivseite 34 des Steuerkolbens 31 erreicht werden, dass der Steuerkolben 31 bei gleichen Drücken in dem Positivvolumen 35 und dem Negativvolumen 37 des Steuerkolbens 31, auf die Steuerkolbenstange 32 eine daraus resultierende Kraft ausübt, die das Tellerventil 28 solange offen hält, bis sich ein signifikanter Druckunterschied zwischen dem Positivvolumen 35 und dem Negativvolumen 37 einstellt und der Steuerkolben 31 das Tellerventil 28 gegen den Tellerventilsitz 30 schließt und vorspannt.

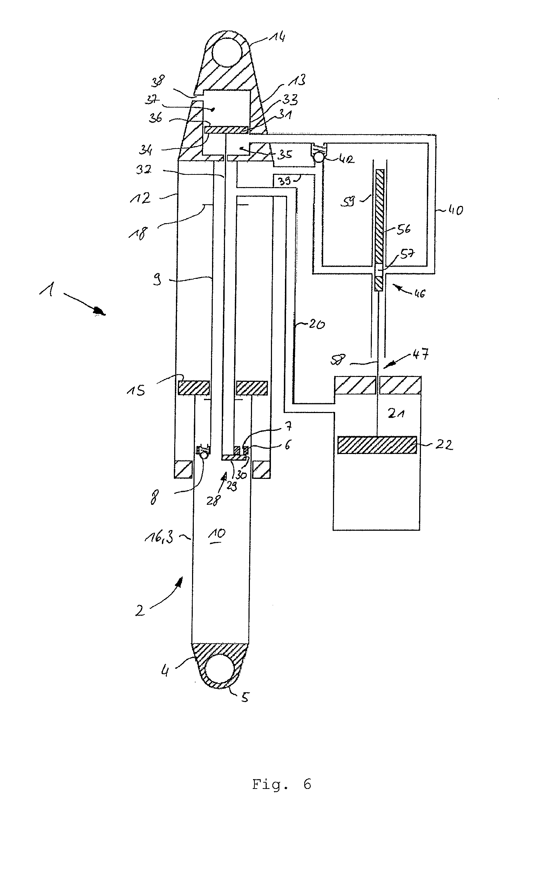

Eine vierte Zugstufe des Dämpferbeins 1 ist in Figur 6 gezeigt. Gemäß der vierten Zugstufe ist der Positivschieber 46 via die Schubstange 58 von dem Trennelement 22 angesteuert, wobei der Positivschieber 46 von einem Vorspannventil 42 umgangen ist. Das Vorspannventil 42 ist derart zwischen der Druckbeaufschlagungsleitung 39 und der Positivleitung 40 eingebaut, dass beim Ausfahren des Dämpferbeins 1 das Vorspannventil 42 in seiner Geschlossenstellung und beim Einfahren des Dämpferbeins 1 unter Überwinden der Vorspannung in dessen Offenstellung bringbar ist. Die Vorspannung des Vorspannventils 42 kann dann überwunden werden, wenn der Positivschieber 46 nach Erreichen des vorherbestimmten Hubwegs geschlossen ist und bei weiterem Einfahren des Dämpferbeins 1 der Druckunterschied zwischen dem Positivvolumen 35 und dem Inneren des Gasdruckfederzylinderkopfs 12 die Vorspannung des Vorspannventils 42 übersteigt. Das Vorspannventil 42 ist dann in seine Offenstellung gebracht, wodurch das Positivvolumen 35 mit dem Inneren des Gasdruckfederzylinders 12 verbunden ist, obwohl der Positivschieber 46 in seiner Geschlossenstellung ist. Ein Ausgleich des so über den Einfahrvorgang des Dämpferbeines 1 in dem Positivvolumen 35 gespeicherten Druckes kann erst erreicht werden, wenn das Dämpferbein 1 seinen vorbestimmten Ausfahrzustand erreicht hat, und der Positivschieber 46 dadurch in seine Offenstellung gelangt ist.

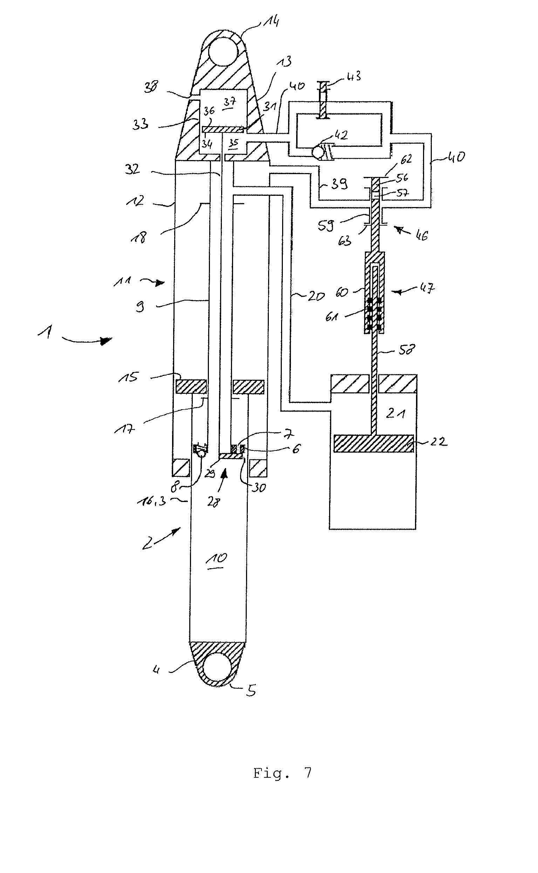

Eine fünfte Zugstufe des Dämpferbeins 1 ist in Fig. 7 gezeigt. In der Positivleitung 40 ist der Positivschieber 46 mit der Rutschkupplung 60 als die Positivschieberkupplung 47 von dem Trennelement 22 via die Schubstange 58 angetrieben. In der Positivleitung 40 ist ferner ein Auf-Zu-Ventil 43 eingebaut, das von einem Vorspannventil 42 umgangen ist. Ist das Auf-Zu-Ventil 43 in seine Geschlossenstellung gebracht, ist die Verbindung des Positivvolumens 35 mit dem Inneren des Gasdruckfederzylinder 12 via das Vorspannventil 42 bewerkstelligt. Ist hingegen das Auf-Zu-Ventil 43 in seine Offenstellung gebracht, so ist das Vorspannventil 42 wirkungslos geschaltet. Das Auf-Zu-Ventil 43 ist von außen betätigbar ausgeführt, so dass das Auf-Zu-Ventil 43 wahlweise in dessen Auf- bzw. Zu-Stellung bringbar ist. Durch diese Anordnung ist es bewerkstelligt, dass bei geschlossenem Auf-Zu-Ventil 43, beim Einfahren des Dämpferbeins, der Druck im Positivvolumen 35 nicht mehr ansteigen kann und ein von einem vorhergehenden Einfedervorgang verbleibender Gasdruck im Positivvolumen 35, bei der nächsten Hubumkehr von Ausfahren zu Einfahren, mit dem bei dieser Hubumkehr in der Gasdruckfeder 11 herrschendem Gasdruck über das Vorspannventil 42 ausgeglichen wird und erst bei erneutem Öffnen des Auf-Zu-Ventils 43 wieder ansteigen kann.

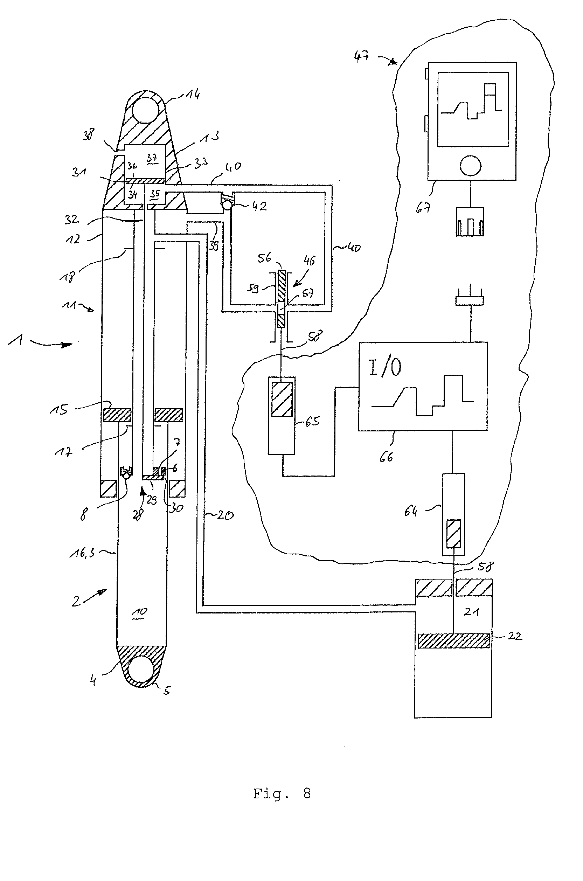

Eine sechste Zugstufe des Dämpferbeins 1 ist in Figur 8 gezeigt. Die Positivschieberkupplung 47 weist einen Sensor 64 auf, der via die Schubstange 58 mit dem Trennelement 22 gekuppelt ist. Mit dem Sensor 64 ist die Lage des Trennelements 22 detektierbar, in Abhängigkeit dessen ein Aktuator 65 ansteuerbar ist, der die Schubstange 58 zum Betätigen des Positivschiebers 46 antreibt. Der Sensor 64 ist eingerichtet in Abhängigkeit von der Lage des Trennelements 22 Daten zu generieren, die in einen Wandler 66 eingegeben werden. In Abhängigkeit dieser Daten generiert der Wandler 66 eine entsprechende Ansteuerung des Aktuators 65. Der Wandler 66 verarbeitet neben der Lage der Trennelements 22 dessen Bewegungsgeschwindigkeit, dessen Bewegungsrichtung und dessen Bewegungsrichtungswechsel. Die Korrelation zwischen dem vom Sensor 64 an den Wandler 66 eingegebenen Daten und die Ansteuerung des Aktuators 65 ist im Wandler 66 festgelegt. Diese Korrelation ist veränderbar durch ein Wandlermanipulationsgerät 67, bevorzugterweise einem Smartphone, das eine direkte Kennlinienmanipulation dieser Korrelation via grafischer Benutzeroberfläche an seinem Bildschirm zulässt, das an dem Wandler 66 bei Bedarf anschließbar ist, insbesondere zum Aufspielen der neu eingestellten Korrelation oder zur direkten Manipulation derselben direkt im Wandler 66.

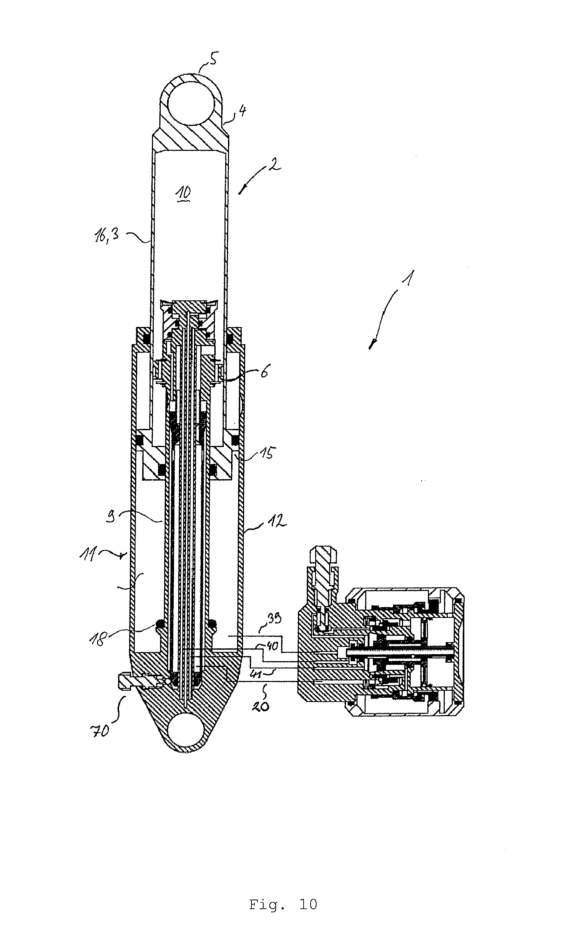

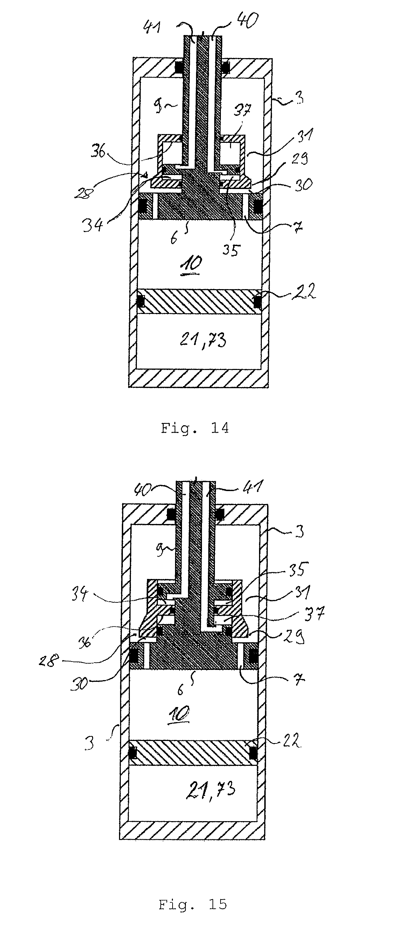

In Figuren 10 bis 13 ist ein Querschnitt einer Ausführungsform des Dämpferbeins 1 mit einer Gasdruckfeder 11 gezeigt. In Figuren 14 bis 17 sind Querschnitte von Ausführungsformen des Dämpferkolbens 6 und des Tellerventils 28 gezeigt.

Eine Gasdruckbeaufschlagungseinrichtung ist wahlweise als die Druckbeaufschlagungsleitung 39, die Positivleitung 40, die Negativleitung 41, das Vorspannventil 42, das Auf-Zu-Ventil 43, der Negativschieber 44, die Negativschieberkupplung 45, der Positivschieber 46, die Positivschieberkupplung 47, der Positivschieberkolben 48, der Positivschieberzylinder 49, das Positivvariationsvolumen 50, die Positivverstellschraube 51, das Negativvariationsvolumen 52, die Umgehung 53, der Negativkolben 54, die Negativvariationsschraube 55, die Schieberplatte 56, die Schieberöffnung 57, die Schubstange 58, die Führung 59, die Rutschkupplung 60, der O-Ring 61, der erste Anschlag 62, der zweite Anschlag 63, der Sensor 64, der Aktuator 65, der Wandler 66 und das Wandlermanipulationsgerät 67 ausgeführt.

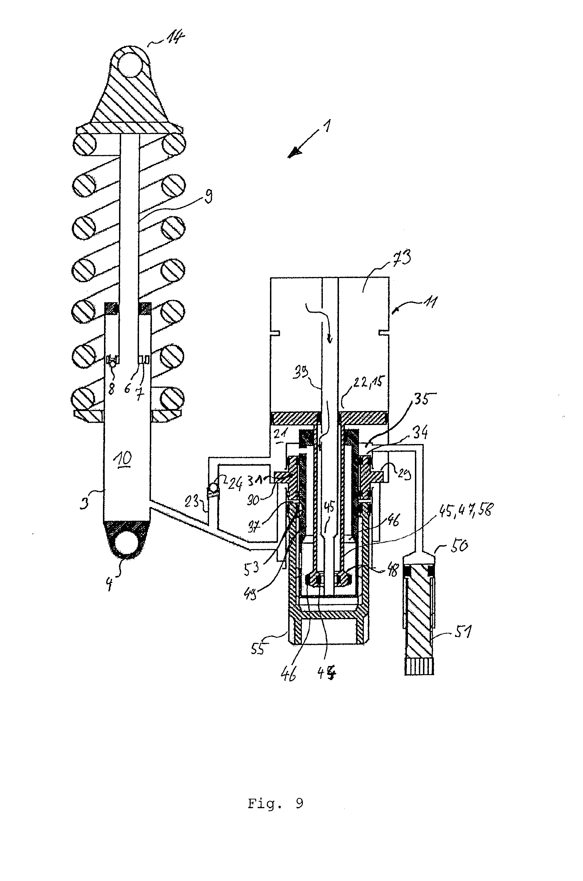

Das Dämpferbein 1 gemäß Figur 9 entspricht dem Schema der Druckstufe aus Figur 2, weist aber statt der Gasdruckfeder 11 in der Figur 2 eine Schraubenfeder 68 auf. Ein über das Trennelement 22 auf die Ausgleichskammer 21 und damit über das Dämpferfluid auf die Kolbenstange 9 wirkender Gasdruck der Druckkammer 73, die damit wie eine unterstützende Gasdruckfeder parallel zur Schraubenfeder wirkt, wird als das Steuerfluid eingesetzt und wirkt hierbei über die Druckbeaufschlagungsleitung 39 und die Schieber 44 und 46 am Steuerkolben 31. Die Einzelkomponenten, insbesondere das Tellerventil 28, der Steuerkolben 31, das Trennelement 22, der Positivschieber 46 und der Negativschieber 44, der Positivschieberkolben 48 und der Positivschieberzylinder 49 sind zylindrisch bzw. ringförmig ausgebildet und zueinander konzentrisch angeordnet.

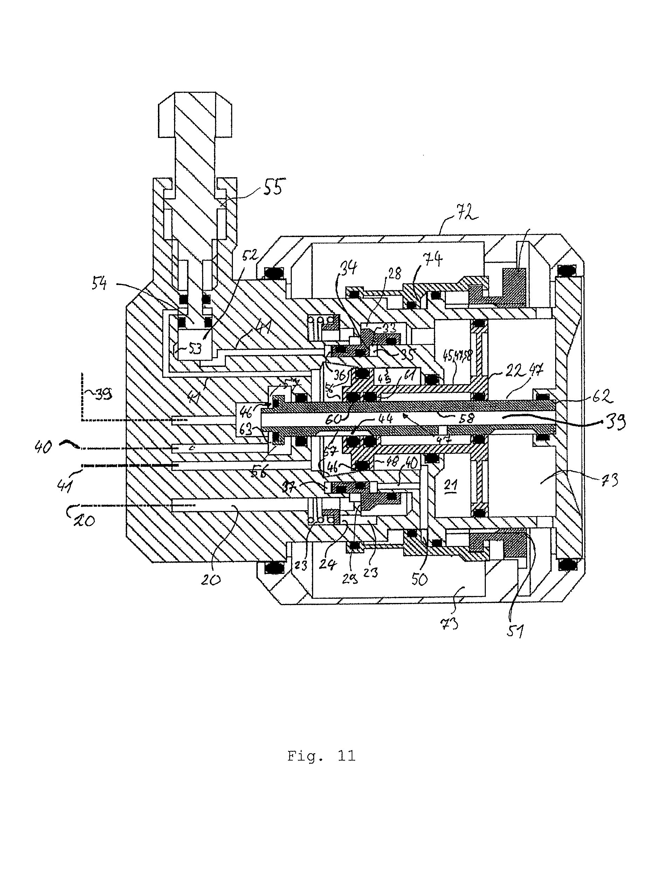

Das Dämpferbein 1 gemäß Figur 10 mit Detaildarstellungen in Figuren 11 bis 13, entspricht einer Kombination der Druck - und Zugstufe der Schemen gemäß Figuren 2 und 5. Das Tellerventil 28 und der Steuerkolben 31 der Zugstufe sind dabei direkt am Dämpferkolben 6 konzentrisch zur Kolbenstange 9 angeordnet. Das Tellerventil 28 wirkt dabei in Serie zu einem über einen Zugstufenversteller 70 manuell, außen am Dämpferbein 1 vom Fahrer einstellbaren Zugstufenverstellventil 69 und parallel zu einem am Dämpferkolben 6 angebrachten Federscheibenventil 71.

Der Positivschieber 46, Die Positivschieberkupplung 47 der Negativschieber 44, die Negativschieberkupplung 45 sowohl der Druck- , als auch der Zugstufe, das Tellerventil 28, der Steuerkolben 31 und das Positivvariationsvolumen 50, das Rückströmventil 24 der Druckstufe, die Rutschkupplung 60 und die Schubstange 58 der Zugstufe sind wiederum besonders vorteilhaft konzentrisch zueinander, innerhalb einer, außen am Dämpferbein angeordneten, zylindrisch ausgeformten Druckkammer 73, angeordnet, wobei die außen am Dämpferbein 1, drucklos vom Fahrer drehbar angeordnete Drehhülse 72 der Druckkammer 73 die Positivvariationsschraube 51 über eine Radialverzahnung radial mitnimmt, die bei Verdrehen der Drehhülse 72 ihrerseits den als Ringkolben ausgeführten und ebenfalls auf Grund der Anordnung und Größe seiner Wirkflächen innerhalb der Druckkammer 73 im unbelasteten Zustand des Dämpferbeins 1 kraftfrei verschiebbaren Positivvariationskolben verschiebt, wodurch sich ein verändertes Positivvariationsvolumen 50 einstellt.

Die Positivschieberkupplung 47 ist in dieser Anordnung gleichzeitig auch als die Schubstange 58 und als die durch die Rutschkupplung 60 betätigte Positivschieberkupplung 47 der Zugstufe ausgestaltet. Die Rutschkupplung 60 mit den O-Ringen 61 ist auch der Negativschieber 44 mit der Schieberöffnung 57 und der Schieberplatte 56 sowohl der Zug- als auch der Druckstufe, wobei der Negativschieber 44 wiederum als der Positivschieberkolben 48 ausgeformt ist, der wiederum mit der teilweise kegelförmig ausgeformten Mantelfläche des Positivschieberzylinders 49 den Positivschieber 46 der Druckstufe bildet.

Besonders vorteilhaft ist die Positivschieberkupplung 47 der Zugstufe mit ihren Anschlägen 63 und 62 auch als die Druckbeaufschlagungsleitung 39 ausgelegt, wodurch sie von beiden Stirnseiten an den beiden Anschlägen 62 und 63 vom gleichen Umgebungsdruck umgeben und so gestaltet ist, dass die beiden Stirnflächen in ihrer Fläche gleich groß sind, wodurch die Positivschieberkupplung 47 in jedem Druckzustand der Gasdruckbeaufschlagungseinrichtung nahezu kraftfrei bewegbar, und damit von den geringen Kräften der Rutschkupplung 60 jederzeit leicht verschiebbar, ausgeführt ist.

Die Figuren 14- 17 zeigen verschiedene Ausführungsformen des Steuerkolbens 31 mit dem Tellerventil 28. In der Figur 14 bis 16 ist der Steuerkolben 31 so ausgestaltet, dass die vom Steuerfluid über die Positivleitung 40 und die Negativleitung 41 beaufschlagte Positivseite 34 und Negativseite 36 gleich groß sind und der von Dämpferfluid umgebene Steuerkolben 31 sein Außenvolumen zum Dämpferfluid hin und damit das Dämpfervolumen 10 durch seine Verschiebung nicht verändert. Dadurch ist ein derart gestalteter Steuerkolben 31 von insbesondere statischen Fluiddrücken innerhalb des Dämpferfluides, wie sie z.B. über das Trennelement 22 von der Druckkammer 73 auf das Dämpferfluid aufgebracht werden, unabhängig.

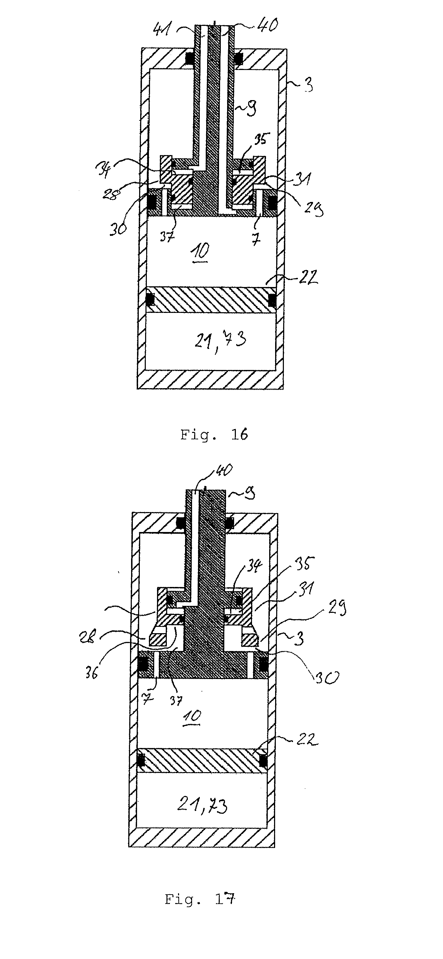

Figur 17 zeigt eine Ausführungsform des Steuerkolbens 31, der auf der Positivseite 34 vom Druck des Steuerfluides und auf der Negativseite 36 von dem über das Trennelement 22 und das Dämpferfluid aufgebrachten Druck der Druckkammer 73 beaufschlagt ist. Die Druckbeaufschlagungseinrichtung steuert bei dieser Anordnung nur den Druck in der Positvkammer 35.

### Bezugszeichenliste

- 1: Dämpferbein
- 2: Stoßdämpfer
- 3: Dämpferzylinder
- 4: Dämpferzylinderkopf
- 5: Laufradauge
- 6: Dämpferkolben
- 7: Durchlass
- 8: Zugstufenventil
- 9: Dämpferkolbenstange
- 10: Dämpfervolumen
- 11: Gasdruckfeder
- 12: Gasdruckfederzylinder
- 13: Gasdruckfederzylinderkopf
- 14: Rahmenauge
- 15: Gasdruckfederkolben
- 16: Gasdruckfederkolbenstange
- 17: erster Gasdruckfederkolbenanschlag
- 18: zweiter Gasdruckfederkolbenanschlag
- 19: Gasdruckfederkolbenstangenlager
- 20: Ausgleichsleitung
- 21: Ausgleichskammer
- 22: Trennelement
- 23: Rückströmleitung
- 24: Rückströmventil
- 25: Blende
- 26: Sensorleitung
- 27: Sensorkolben
- 28: Tellerventil
- 29: Teller
- 30: Tellerventilsitz
- 31: Steuerkolben
- 32: Steuerkolbenstange
- 33: Steuerkolbenzylinder
- 34: Positivseite
- 35: Positivvolumen
- 36: Negativseite
- 37: Negativvolumen
- 38: Atmosphärenöffnung
- 39: Druckbeaufschlagungsleitung
- 40: Positivleitung
- 41: Negativleitung
- 42: Vorspannventil
- 43: Auf-Zu-Ventil
- 44: Negativschieber
- 45: Negativschieberkupplung
- 46: Positivschieber
- 47: Positivschieberkupplung
- 48: Positivschieberkolben
- 49: Positivschieberzylinder
- 50: Positivvariationsvolumen
- 51: Positivverstellschraube
- 52: Negativvariationsvolumen
- 53: Umgehung
- 54: Negativkolben
- 55: Negativvariationsschraube
- 56: Schieberplatte
- 57: Schieberöffnung
- 58: Schubstange
- 59: Führung
- 60: Rutschkupplung
- 61: O-Ring
- 62: erster Anschlag
- 63: zweiter Anschlag
- 64: Sensor
- 65: Aktuator
- 66: Wandler
- 67: Wandlermanipulationsgerät
- 68: Schraubenfeder
- 69: Zugstufenverstellventil
- 70: Zugstufenversteller
- 71: Federscheibenventil
- 72: Drehhülse
- 73: Druckkammer
- 74: Positivvariationskolben

## Patentansprüche

1. Dämpferbein für ein Fahrrad, mit einem hydraulischen Stoßdämpfer (2), der ein mit einem inkompressiblen Dämpferfluid gefülltes Dämpfervolumen (10), eine Druckbeaufschlagungseinrichtung (39 bis 67), die eingerichtet ist den aktuellen Verfahrzustand des Dämpferbeins zu detektieren, sowie mindestens ein Tellerventil (28) aufweist und eingerichtet ist, dass beim Verfahren des Dämpferbeins (1) das Dämpfervolumen (10) sich verändert, wodurch das Dämpferfluid unter Erzeugung einer dem Verfahren entgegenwirkenden Dämpfungskraft durch das mindestens eine Tellerventil (28) strömt, das einen Steuerkolben (31) aufweist, der mit dem Tellerventil (28) gekoppelt ist den Öffnungsgrad des Tellerventils (28) zu variieren und von der Druckbeaufschlagungseinrichtung (39 bis 67) derart in Abhängigkeit des von der Druckbeaufschlagungseinrichtung (39 bis 67) detektierten Verfahrzustands mit einem kompressiblen Steuerfluid druckbeaufschlagbar ist, dass beim Detektieren eines vorherbestimmten Verfahrzustands des Dämpferfederbeins (1) das Tellerventil (28) in seine Schließrichtung vorgespannt ist, wodurch die Dämpfungskraft verstärkt ist.

2. Dämpferbein gemäß Anspruch 1, wobei die Druckbeaufschlagungseinrichtung (39 bis 67) ein Steuerfluidreservoir (12) aufweist, das derart eingerichtet ist, dass sich der Druck des Steuerfluids bei abnehmendem Hub des Dämpferbeins (1) erhöht.

3. Dämpferbein gemäß Anspruch 2, wobei das Dämpferbein (1) eine Gasdruckfeder (11) aufweist, die parallel zum Stoßdämpfer (2) geschaltet und ein mit einem kompressiblen Federfluid gefülltes Federvolumen (12) ausweist, wobei das Federfluid das Steuerfluid und das Federvolumen das Steuerfluidreservoir ist.

4. Dämpferbein gemäß Anspruch 2 oder 3, wobei der Steuerkolben (31) eine Positivseite (34), an der der Druck des Steuerfluids die Vorspannung des Tellerventils (28) in seine Schließrichtung verstärkt, und eine Negativseite (36) aufweist, an der der Druck des Steuerfluids die Vorspannung des Tellerventils (28) in seine Schließrichtung abschwächt.

5. Dämpferbein gemäß Anspruch 4, wobei der Steuerkolben (31) von der Druckbeaufschlagungseinrichtung (39 bis 67) so mit dem Steuerfluid an der Positivseite (34) und/oder der Negativseite (36) beaufschlagt ist, dass beim Verfahren des Dämpferbeins (1) vor dem Detektieren des vorherbestimmten Verfahrzustands der Druckunterschied des Steuerfluids über den Steuerkolben (31) konstant ist und ab dem Detektieren des vorherbestimmten Verfahrzustands entsprechend dem Einfahrgrad des Dämpfungsbeins (1) zunimmt.

6. Dämpferbein gemäß Anspruch 4 oder 5, wobei von der Nullstellung des Dämpferbeins (1) bis zum Detektieren des vorherbestimmten Verfahrzustands der Druckunterschied des Steuerfluids über den Steuerkolben (31) konstant, insbesondere Null, ist.

7. Dämpferbein gemäß einem der Ansprüche 4 bis 6, wobei die Negativseite (34) mit Atmosphäre beaufschlagt ist, so dass das Tellerventil (28) mit dem Steuerkolben (31) vorspannbar ist.

8. Dämpferbein gemäß einem der Ansprüche 4 bis 7, wobei die Fläche der Positivseite (34) größer als die der Negativseite (36) ist, so dass das Trennventil (28) mit dem Steuerkolben (31) vorspannbar ist.

9. Dämpferbein gemäß einem der Ansprüche 4 bis 8, wobei die Druckbeaufschlagungseinrichtung (39 bis 67) ein weiteres Steuerfluidreservior aufweist, mit dem der Steuerkolben (31) mit Steuerfluid druckbeaufschlagbar ist, so dass das Trennventil (28) mit dem Steuerkolben (31) vorspannbar ist.

10. Dämpferbein gemäß einem der Ansprüche 4 bis 9, wobei die Druckbeaufschlagungseinrichtung (39 bis 67) eine Positivschieberkupplung (47) und einen Positivschieber (46) mit Auf-Zu-Schieberstellungen aufweist, der an der Positivseite (34) zur Druckbeaufschlagung des Steuerkolbens (31) so angeordnet ist, dass durch Betätigung der Positivschieberkupplung (47) unter Abtrennen der Positivseite (34) von dem Steuerfluidreservoir (12) mit dem Positivschieber (46) ein Positivvolumen (35) an der Positivseite (34) isolierbar ist.

11. Dämpferbein gemäß einem der Ansprüche 4 bis 10, wobei die Druckbeaufschlagungseinrichtung (39 bis 67) eine Negativschieberkupplung (45) und einen Negativschieber (44) mit Auf-Zu-Schieberstellungen aufweist, der an der Negativseite (36) zur Druckbeaufschlagung des Steuerkolbens (31) so angeordnet ist, dass durch Betätigung der Negativschieberkupplung (45) unter Abtrennen der Negativseite (36) von dem Steuerfluidreservoir (12) mit dem Negativschieber (44) ein Negativvolumen (37) an der Negativseite (36) isolierbar ist.

12. Dämpferbein gemäß Anspruch 10 oder 11, wobei die Druckbeaufschlagungseinrichtung (39 bis 67) eine Volumenjustiereinrichtung (48 bis 51 und/oder 52 bis 55) für das Positivvolumen (35) und/oder das Negativvolumen (37) aufweist, mit dem das Volumen des Positivvolumens (35) bzw. des Negativvolumens (37) einstellbar ist.

13. Dämpferbein gemäß einem der Ansprüche 10 bis 12, wobei die Druckbeaufschlagungseinrichtung (39 bis 67) einen Positivschieberkolben (48) aufweist, mit dem das Positivvolumen (35) begrenzt ist und der den Positivschieber (46) bildet, wobei unter Betätigung der Positivschieberkupplung (47) das Positivvolumen (35) bei dem einfahrenden Dämpferbein (1) verkleinerbar ist.

14. Dämpferbein gemäß einem der Ansprüche 10 bis 13, wobei der Stoßdämpfer (2) einen Dämpferzylinder (3) und einen in diesem verschiebbar angeordneten Dämpferkolben (6) aufweist, der in dem Dämpferzylinder (3) das Dämpfervolumen (10) abgrenzt, wobei beim Verfahren des Stoßdämpfers (1) mit dem Dämpferzylinder (3) die Positivschieberkupplung (47) und/oder die Negativschieberkupplung (45) angetrieben sind.

15. Dämpferbein gemäß einem der Ansprüche 10 bis 14, wobei der Stoßdämpfer (2) eine Dämpferkolbenstange (9) aufweist, mit der der Dämpferkolben (6) von außerhalb des Dämpferzylinders (3) verschiebbar ist, wobei beim Verfahren des Stoßdämpfers (2) mit der Dämpferkolbenstange (9) die Positivschieberkupplung (47) und/oder die Negativschieberkupplung (45) angetrieben sind.

16. Dämpferbein gemäß einem der Ansprüche 10 bis 15, wobei der Stoßdämpfer (2) eine mit dem Dämpferzylinder (3) dämpferfluidleitend verbundene und zum Volumenausgleich von einer zeitlich variablen Verdrängung des Dämfungsfluids durch die Dämpfungskolbenstange (9) beim Verfahren des Dämpferbeins (1) vorgesehne Ausgleichskammer (21) aufweist, wobei beim Verfahren des Stoßdämpfers (2) durch den an einer Engstelle (25) von dem verdrängtem Dämpferfluid erzeugten Strömungswiderstand die Positivschieberkupplung (47) und/oder die Negativschieberkupplung (45) angetrieben sind.

17. Dämpferbein gemäß einem der Ansprüche 10 bis 16, wobei der Stoßdämpfer (2) ein Trennelement (22) aufweist, das in der Ausgleichskammer (21) verschiebbar angeordnet ist und mit dem die Ausgleichskammer (21) abgegrenzt ist, wobei mit dem Trennelement (22) durch dessen Verschiebung der Volumenausgleich bewerktstelligbar ist, wobei beim Verfahren des Stoßdämpfers (2) mit dem Trennelement (22) die Positivschieberkupplung (47) und/oder die Negativschieberkupplung (45) angetrieben sind.

18. Dämpferbein gemäß Anspruch 15 oder 17, wobei das Tellerventil (28) in der Zuströmung des Dämpferfluids zur Ausgleichskammer (21) angeordnet ist.

19. Dämpferbein gemäß einem der Ansprüche 10 bis 18, wobei das Tellerventil (28) am Dämpferkolben (9) in Reihe zu einem Dämpferloch (7) des Dämpferkolbens (6) angeordnet ist.

20. Dämpferbein gemäß einem der Ansprüche 10 bis 19, wobei der vorherbestimmte Verfahrzustand ein vorherbestimmter Hubwert des Stoßdämpfers (1) ist und die Positivkupplung (47) und/oder die Negativkupplung (45) eingerichtet sind einen Wechsel der Schieberstellung beim Detektieren des Hubwerts zu bewirken.

21. Dämpferbein gemäß einem der Ansprüche 10 bis 20, wobei der vorherbestimmte Verfahrzustand eine Richtungsänderung beim Verfahren des Stoßdämpfers (1) ist und die Positivkupplung (47) und/oder die Negativkupplung (45) eingerichtet sind einen Wechsel der Sieberstellung bei Auftreten der Richtungsänderung zu bewirken.
